# EUROPEAN PATENT SPECIFICATION

(11) **EP 4 272 934 B1**
(45) Date of publication and mention of the grant of the patent: **02.04.2025**
(21) Application number: 23166454.1
(22) Date of filing: 04.04.2023
(51) Int. Cl.: B29C 65/18, B29C 65/74, B29C 65/82

(54) **MACHINE, FEELER DEVICE AND METHOD FOR THE AUTOMATIC CONTROL OF THE LONGITUDINAL WELD ON PLASTIC FILM BAGS**
VORRICHTUNG, SENSOR UND VERFAHREN ZUR AUTOMATISCHEN KONTROLLE DER LÄNGSNAHT AN KUNSTSTOFFFOLIENBEUTELN
DISPOSITIF, PALPEUR ET PROCÉDÉ POUR LE CONTRÔLE AUTOMATIQUE DE LA SOUDURE LONGITUDINALE DE SACHETS EN FILM PLASTIQUE

(30) Priority: 06.05.2022 IT 202200009377
(43) Date of publication of application: 08.11.2023
(73) Proprietor: Mobert S.r.l., 20025 Legnano (MI) (IT)
(72) Inventor: TREZZI, Roberto, 20025 Legnano (MI) (IT); TONIATO, Maurizio, 21012 Cassano Magnago (VA) (IT)
(74) Representative: Petruzziello, Aldo

(56) References cited:
- EP-A2- 0 117 730
- US-A- 3 368 930
- US-A- 4 002 055

## Description

The present invention relates to a device for the automatic control of the longitudinal weld on plastic film bags.

Machines for the production of bags in polyethylene or biodegradable film provide in the majority of cases for processing on several tracks in order to increase productivity thereof.

The processing cycle involves starting from a reel of flattened tubular film (previously produced by an extrusion machine) of a width equal to a multiple of the width of the bags to be produced.

According to the machine model and the format of the bags to be obtained, the number of tracks can vary from 2 to 6 or even more.

In order to work on several tracks, the reel is positioned on a reel holder, also called an unwinder, which controls unwinding thereof by means of an axial or tangential motor drive.

The tubular film then enters an apparatus called a cutter/sealer equipped with blades heated to a temperature that can vary from 200 to 400 degrees (depending on the type and thickness of the film being processed).

Each blade, coming into contact with the plastic film, causes the longitudinal cutting thereof and at the same time, through the effect of the temperature of the blade, creates a longitudinal weld seam.

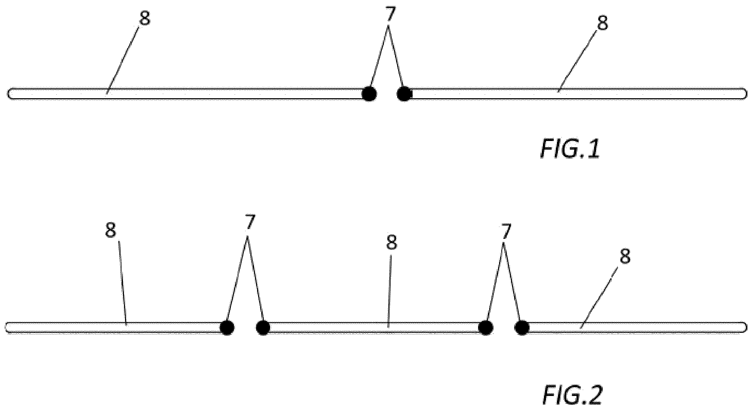

Substantially, if a cutter/sealer blade is positioned at the centre of the film being processed, it will divide the film into two parts, at the same time creating a weld seam in the areas of film that slide in contact with the blade. In this way two strips of tubular film are generated. Therefore, from a flattened tube-shaped film, two flattened tubes will be obtained, each of which will have a weld seam on one side, as schematised in the accompanying Figure 1, where the dots represent the weld seams that are formed on the film after cutting.

Similarly, if two cutter/sealer blades are positioned, the tube will be divided into three parts, as schematised in Figure 2, and so on.

After cutting and longitudinal welding, the film enters an apparatus known as gusseting machine, in which the side gussets of the bag to be produced are formed. To perform this operation, compressed air is injected manually into the tube before start-up of the machine. In this way tubes are created, which in jargon are called "balloons", one for each track being processed, where the air that has been injected remains if no leaks take place.

During processing, the film slides inside the gusseting machine driven by a pair of calenders. During this forward movement, the air remains inside the gusseting machine, i.e. the tube, in that the pair of calenders, which are rubber-coated, crush the tube, preventing the air from escaping.

The critical point of processing with the cutter/sealer device is the longitudinal weld.

Normally, control of the mechanical tightness of this longitudinal weld is carried out by the operator:
- during the start-up phase, pressing with a finger on the balloon of the gusseting machine in the area of the weld, checking that, with the pressure caused on the weld, it does not break,
- during processing, on a sample basis, taking bags produced and pulling the weld to check that it does not tear.

During processing, it can happen that the film being processed becomes thicker and therefore requires a higher welding temperature, or that the cutter/sealer blade becomes soiled and no longer forms a regular weld. If the operator is not careful to check with a certain frequency the quality of the weld, the machine can produce considerable quantities of product that is not well welded and therefore a reject.

The prior art is based on photocells that control the diameter of the balloons of the gusseting machine. When the balloon of the gusseting machine deflates as a result of a breakage of the weld, the photocell stops the machine. This system has two weak points:
- it is normal for the balloon of the gusseting machine to deflate slightly during processing due to the very slight leakage of air through the sealing calenders. This can in this way generate alarms and subsequent unmotivated line stops;
- if the weld is not subjected to a slight traction, it may seem good, but it can in actual fact break extremely easily once it is put under traction (false weld).

EP0117730A2 discloses a flat bottom plastic film bag made by a process wherein a blown film tube is continuously slit sealed into a plurality of tubes which are reinflated, then collapsed to form opposed double pleat folds, followed by corrugation of the side and end walls of the tube, formation of a transverse crease defining the fold line between the bottom and sidewalls and, finally, formation of gusset welds, the transverse bottom seal and perforation or cutoff to form the individual bags.

US3368930A discloses a method and apparatus for forming tubes of thermoplastic film.

US4002055A discloses a process and apparatus for testing the tightness of seam joints of synthetic resin sheets by means of vacuum.

The object of the invention is to eliminate the disadvantages of the prior art described above.

More particularly, an object of the invention is to provide a device that ensures reliable and constant control of the longitudinal weld of the bags, allowing immediate intervention in the event of a defective weld and avoiding rejects of material.

Another object of the invention is to provide such a device which is simple and inexpensive to manufacture.

These and other objects are achieved by the device for automatic control of the weld according to the invention that has the features of the appended independent claim 1.

Advantageous embodiments of the invention are disclosed in the dependent claims.

Substantially, a machine for the production of plastic film bags according to the invention comprises: a station for unwinding a flattened tubular film; a cutter/sealer station, wherein at least one hot blade in contact with the plastic film causes longitudinal cutting and simultaneously, through the effect of the temperature of the blade, the formation of longitudinal weld seams, obtaining at least two flattened tubular films; a station of gusseting machines, i.e., apparatuses for the formation of the side gussets of the bags to be produced, in which each flattened tube takes on the shape of a balloon filled with compressed air with at least one longitudinal lateral weld; in which at least one feeler device is placed at each balloon for the automatic control of a corresponding longitudinal weld, simulating the pressure exerted by the operator's finger against the balloon of the gusseting machine and immediately signalling the possible rupture of the weld.

Further features of the invention will be made clearer by the following detailed description, referred to one of its embodiments purely by way of non-limiting example, illustrated in the accompanying drawings, in which:
Figures 1 and 2 are schematic cross section views of a tubular film divided into two parts by a cutter/sealer blade and into three parts by two cutter/sealer blades, respectively;
Figure 3 is a side view of the first part of a machine for the production of plastic film bags, provided with devices for the automatic control of the longitudinal weld according to the invention, placed at the gusseting machines, i.e. the apparatuses for the formation of the side gussets;
Figure 4 is a schematic view along a transverse plane of the station of the gusseting machines, taken along arrow F of Figure 3, showing a machine with processing on three tracks;
Figure 5 is a longitudinal section view taken along plane V-V of Figure 4;
Figure 6 is an axonometric view of the station of the gusseting machines;
Figure 7 is an axonometric view of the station of the gusseting machines taken from a different angle with respect to that of Figure 6;
Figures 8a- 8d are views of a device for the automatic control of the longitudinal weld according to the invention, taken from four different angles.

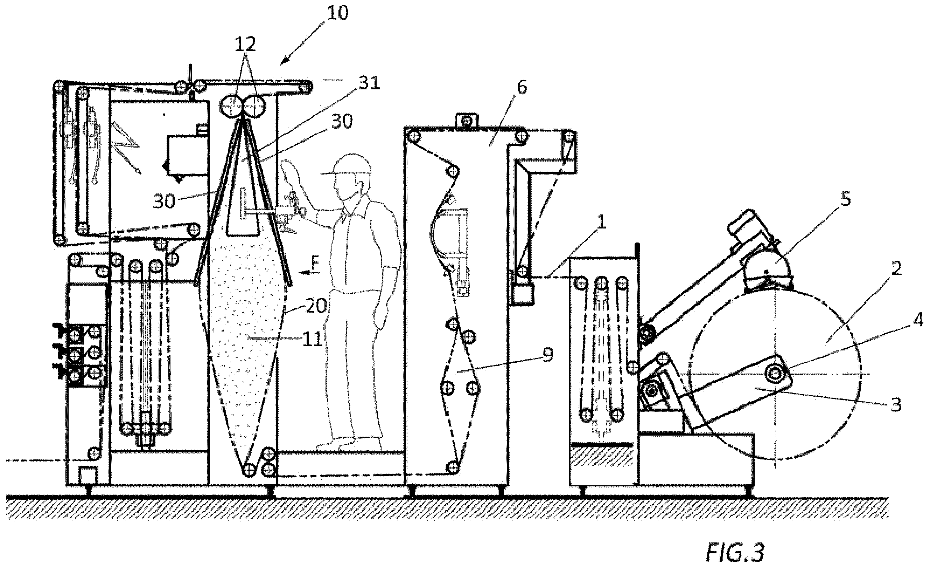

Before describing in more or less detail the device for the automatic control of the longitudinal weld on plastic film bags according to the invention, the production cycle of these bags is again described in brief with reference to the partial diagram in Figure 3.

It starts from a reel 2 of flattened tubular film 1 positioned on a reel holder 3, from which the film is unwound by means of an axial 4 or tangential motor drive 5.

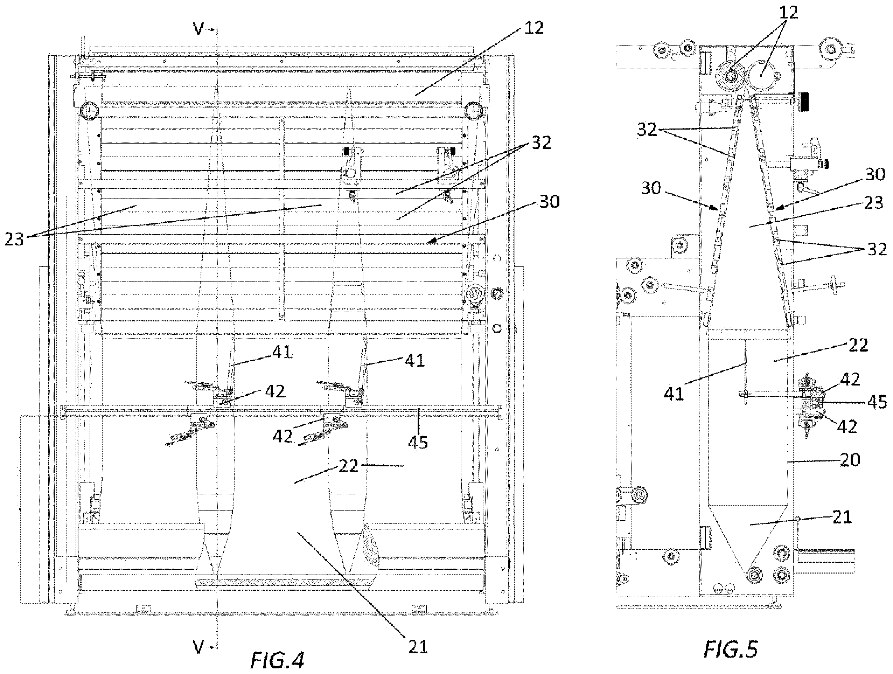

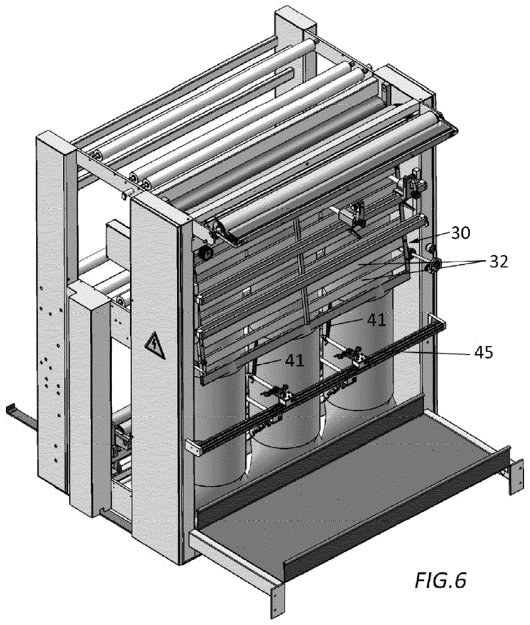

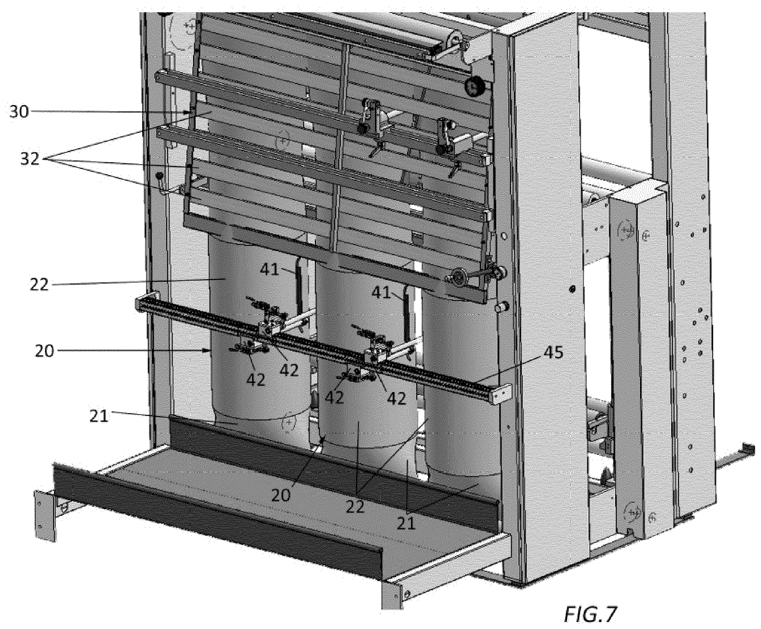

As will be seen in the successive Figures 4, 6, 7, the machine shown works on three tracks, whereby the width of the flattened tubular film 1 is such that three bags of the desired width can be formed simultaneously from it.

The tubular film 1, after having passed over a series of drive rollers, enters the cutter/sealer station 6, where two hot blades come into contact with the plastic film, causing longitudinal cutting thereof and, at the same time, through the effect of the temperature of the blade, the formation of longitudinal weld seams 7 (see Figure 2), obtaining three flattened tubular films 8.

In the longitudinal cutting and sealing station 6, along the path of the flattened film, a zone 9 is also provided, where the two overlapping film layers are kept separate to avoid possible adhesion.

After cutting and longitudinal welding, each flattened tubular film 8 into which the original film has been divided enters a station 10 of the gusseting machines, i.e. apparatuses for the formation of the side gussets of the bags to be produced.

To carry out this operation, before start-up of the machine, compressed air 11 is manually injected inside the tubular film of each track being processed, in this way creating a tube 20 which in jargon is called a "balloon". In a manner in itself known, the compressed air is injected by forming a hole in the film 1, which is subsequently closed.

During processing, the film slides inside the gusseting machine driven by a pair of rubber-coated calenders 12, which crush the tube, preventing the injected air from escaping.

In Figure 3 the balloon 20 has been shown with rhomboidal shape in section or longitudinal view, however a shape closer to the reality of the balloons 20 is that shown in Figures 5 and 4 in longitudinal and transverse view, respectively.

Substantially, a balloon 20 has a lower section 21, wherein it begins to be formed, with trapezoidal shape, with gradual reduction in width, in transverse view and triangular or conical in longitudinal view, followed by a perfectly tubular intermediate section 22, which we can define as cylindrical, and ending with an upper section 23 again with trapezoidal shape, with gradual increase in width, in transverse view and triangular or conical in longitudinal view, until reaching the width of the flattened tube at the calenders 12.

The gusseting machine comprises, in a manner in itself known, a pair of partitions 30, made up of a series of transverse partitions 32, arranged to form the upper section 23 conical in a longitudinal direction to the machine, so as to determine a flattening of the film incoming on the calenders 12. On the two sides of the balloon, thus in a transverse direction to the machine, where at least one weld is present, again at the upper section 23, respective triangular plates 31 (see Figure 3) are provided, which enter the space between the partitions 30 at an adjustable depth, in order to determine the side gussets of the bags to be produced, during the forward movement of the film.

At the exit from the station 10 of the gusseting machines, the flattened film goes to other transverse cutting and sealing stations, not shown in Figure 3, to form bags of the type required.

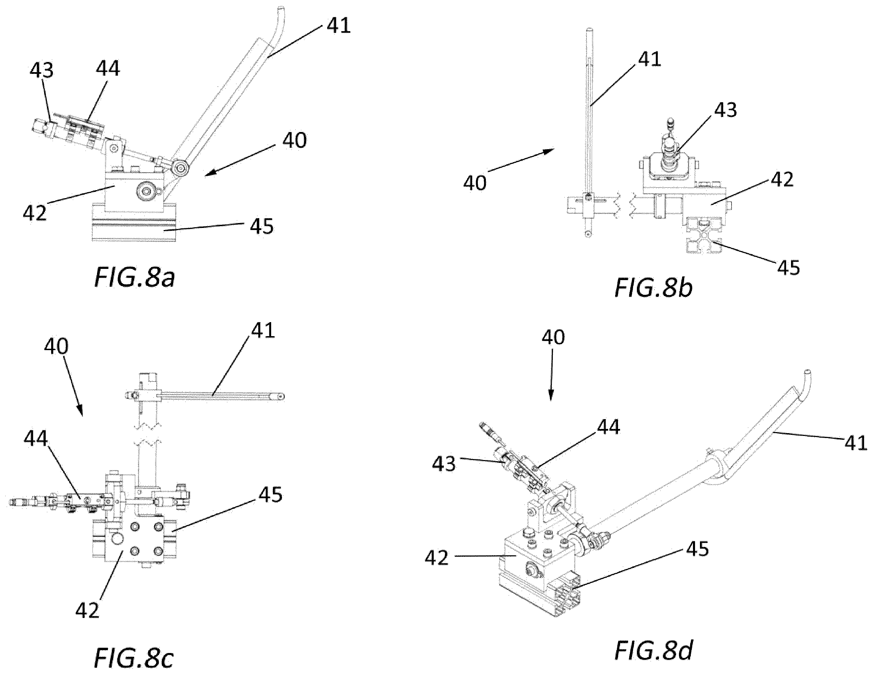

The device for automatic control of the longitudinal weld on plastic film bags according to the invention is now described, made up of a feeler device, shown in various views in Figures 8a to 8d, and denoted as a whole by reference numeral 40.

The feeler device 40 has to simulate the pressure exerted by the operator's finger against the balloon of the gusseting machine and immediately indicate any rupture of the weld.

A feeler device is installed on the machine for each weld to be checked. Therefore, in the specific case of processing on three tracks, with formation of three balloons, the central balloon will have two longitudinal welds at the respective sides, while the two side balloons will have one single lateral weld in that the other side of the tubular film is closed at the start.

A feeler device 40 is composed of a sliding pad 41 hinged to a base 42 and pushed against the corresponding balloon 20 by a piston 43 with pressure that can be regulated as a function of the type and thickness of the film used (therefore of its consistency). The pad 41 is positioned precisely in the area of the balloon where the corresponding longitudinal weld is present.

A position detector 44 is applied on the piston by means of which the position of the pad 41 is known at all times, position that is determined by the diameter of the balloon 20 against which the pad is pushed.

The base 42 of the feeler device is mounted so that it can be adjusted, from above or from below, on a guide bar 45, shown in section in Figures 8b and 8d.

During processing, the pad 41 of the feeler device 40 is subject to continuous oscillations caused by the sliding of the film and, above all, by the low consistency of the balloon 20, which counters only thanks to the slight pressure of the internal air.

Specially designed software does not take into account the oscillations or even the slight deflation of balloon 20 caused by the natural leakage of air between the upper welding calenders 12 but stops the machine if the movement of the feeler device is too sudden, which indicates that some part of film has passed that is not properly welded and, through the slight force applied, the weld has failed.

Figures 4 to 7 show the positioning of the feeler devices 40 at the balloons 20.

As mentioned, in the specific case, four feeler devices 40 are provided, two mounted above and two below the guide bar 45, in positions that can be adjusted on it as a function of the diameter of the balloons 20, in such a way that the sliding pads 41 are inserted in the spaces between two adjacent balloons, coming into contact with respective longitudinal welds of the tubes.

More particularly, the upper feeler devices 40 are arranged to come into contact with their pads 41 with the left side welds of the respective balloons 20, while the lower feeler devices 40 come into contact with their pads 41 with the right side welds of the respective balloons 20.

Therefore, with the central balloon, which has two longitudinal welds, an upper and a lower feeler device will be engaged, while with the two side balloons an upper and a lower feeler device will be engaged, respectively, as can be seen in particular in Figures 4 to 7.

The provision of continuous monitoring of the state of inflation of the balloons 20 with the device according to the invention allows for real-time feedback on the operating status of the machine, avoiding false machine downtimes or wastage of material due to missed stops, as often takes place according to the prior art.

From what has been disclosed above the advantages of the device for the automatic control of the longitudinal weld on plastic film bags according to the invention are clear.

Naturally the invention is not limited to the particular embodiment previously described and illustrated in the accompanying drawings, but numerous detailed changes may be made thereto within the reach of the person skilled in the art, without thereby departing from the scope of the invention itself, as defined in the following claims.

## Claims

1. Machine for the production of plastic film bags comprising:
- a station for unwinding of a flattened tubular film (1);
- a cutter/sealer station (6), where at least one hot blade in contact with the plastic film causes longitudinal cutting and, at the same time, through the effect of the temperature of the blade, the formation of longitudinal weld seams (7), obtaining at least two flattened tubular films (8);
- a station (10) of gusseting machines, i.e. apparatuses for the formation of the side gussets of the bags to be produced, wherein each flattened tubular film (8) takes on the shape of a balloon (20) filled with compressed air with at least one longitudinal lateral weld;
**characterised in that** at each balloon (20) at least one feeler device (40) for the automatic control of a corresponding longitudinal weld is placed, simulating the pressure exerted by the operator's finger against the balloon of the gusset machine and immediately signalling the possible break of the weld.

2. Machine for the production of plastic film bags according to claim 1, **characterised in that** said at least one feeler device consists of a sliding pad (41) hinged to a base (42) and pushed against the corresponding balloon (20) by a piston (43) with pressure that can be regulated as a function of the type and thickness of the film used.

3. Machine for the production of plastic film bags according to claim 2, **characterised in that** said pad (41) is positioned in the area of the balloon (20) where the corresponding longitudinal weld is present.

4. Machine for the production of plastic film bags according to claim 2 or 3, **characterised in that** a position detector (44) is applied on said piston (43) which detects at every instant the position of the pad (41), determined by the diameter of the balloon (20) against which the pad is pushed.

5. Machine for the production of plastic film bags according to any one of claims 2 to 4, **characterised in that** said base (42) of the feeler device is mounted so that it can be adjusted, from above or from below, on a guide bar (45) in such a way that the respective sliding pad (41) is inserted in the space between two adjacent balloons (20), coming into contact with a respective longitudinal weld of a tube.

6. Machine for the production of plastic film bags according to any one of claims 2 to 5, **characterised in that** it comprises a software that does not take into account oscillations or even slight deflation of a balloon (20) caused by natural leakage of air between sealing calenders (12), but stops the machine if the movement of the sliding pad (41) of the feeler device (40) is too sudden.

7. Feeler device (40) for the automatic control of the longitudinal weld on plastic film bags for use in a machine according to claim 1, **characterised in that** it comprises a sliding pad (41) hinged to a base (42) configured to be pushed against a corresponding balloon (20) filled with air of a tubular film by a piston (43) with pressure that can be regulated as a function of the type and thickness of the film used.

8. Feeler device (40) according to claim 7, **characterised in that** a position detector (44) is applied on said piston (43) which detects at every instant the position of the pad (41), determined by the diameter of the balloon (20) against which the pad is pushed.

9. Method for the production of plastic film bags comprising the following steps:
- unwinding of a flattened tubular film (1) from a reel (2) by means of an axial (4) or tangential motor drive (5);
- longitudinal cutting by means of at least one blade heated to a temperature ranging from 200 to 400 degrees and simultaneous formation of longitudinal weld seams (7), through the effect of the blade temperature, obtaining at least two flattened tubular films (8);
- formation of side gussets of the bag to be produced making each flattened tubular film (8) take on the shape of a balloon (20) filled with compressed air with at least one longitudinal lateral weld;
**characterised in that** it provides an automatic control of each longitudinal weld by means of a respective feeler device (40) simulating the pressure exerted by the operator's finger against the corresponding balloon and immediately signalling the possible breakage of the weld detected by a sudden movement of a sliding pad (41) of the feeler device (40).

10. Method according to claim 9, **characterised in that** said sliding pad (41) is pushed against the corresponding balloon (20) by a piston (43) with pressure that can be regulated as a function of the type and thickness of the film used.

## Patentansprüche

1. Maschine zur Herstellung von Kunststofffolienbeuteln umfassend:
- eine Station zum Abwickeln einer abgeflachten Schlauchfolie (1);
- eine Schneid-/Versiegelungsstation (6), in der mindestens eine heiße Klinge in Kontakt mit der Kunststofffolie einen Längsschnitt und gleichzeitig durch die Wirkung der Temperatur der Klinge die Bildung von Längsschweißnähten (7) bewirkt, wodurch mindestens zwei abgeflachte Schlauchfolien (8) erhalten werden;
- eine Station (10) von Seitenfaltmaschinen, d.h. Vorrichtungen zur Bildung der Seitenfalten der herzustellenden Beutel, wobei jede abgeflachte Schlauchfolie (8) die Form eines mit Druckluft gefüllten Ballons (20) mit mindestens einer seitlichen Längsschweißung einnimmt; **dadurch gekennzeichnet, dass** an jedem Ballon (20) mindestens eine Tastvorrichtung (40) für die automatische Kontrolle einer entsprechenden Längsschweißung angebracht ist, die den Druck simuliert, den der Finger des Bedieners gegen den Ballon der Seitenfaltmaschine ausübt, und sofort den möglichen Bruch der Schweißung signalisiert.

2. Maschine zur Herstellung von Kunststofffolienbeuteln nach Anspruch 1, **dadurch gekennzeichnet, dass** die mindestens eine Tastvorrichtung aus einem Gleitkissen (41) besteht, das an einer Basis (42) angelenkt ist und durch einen Kolben (43) mit einem Druck, der in Abhängigkeit von der Art und Dicke der verwendeten Folie reguliert werden kann, gegen den entsprechenden Ballon (20) gedrückt wird.

3. Maschine zur Herstellung von Kunststofffolienbeuteln nach Anspruch 2, **dadurch gekennzeichnet, dass** das Kissen (41) in dem Bereich des Ballons (20) positioniert ist, in dem die entsprechende Längsschweißung vorhanden ist.

4. Maschine zur Herstellung von Kunststofffolienbeuteln nach Anspruch 2 oder 3, **dadurch gekennzeichnet, dass** an dem Kolben (43) ein Positionsdetektor (44) angebracht ist, der zu jedem Zeitpunkt die Position des Kissens (41) erfasst, die durch den Durchmesser des Ballons (20) bestimmt wird, gegen den das Kissen gedrückt wird.

5. Maschine zur Herstellung von Kunststofffolienbeuteln nach einem der Ansprüche 2 bis 4, **dadurch gekennzeichnet, dass** die Basis (42) der Tastvorrichtung derart gelagert ist, dass sie an einer Führungsschiene (45) von oben oder von unten verstellt werden kann, dass das jeweilige Gleitkissen (41) in den Raum zwischen zwei benachbarten Ballons (20) eingesetzt ist und mit einer jeweiligen Längsschweißung eines Schlauches in Kontakt kommt.

6. Maschine zur Herstellung von Kunststofffolienbeuteln nach einem der Ansprüche 2 bis 5, **dadurch gekennzeichnet, dass** sie eine Software umfasst, die Schwingungen oder sogar ein leichtes Entleeren eines Ballons (20), das durch natürliches Entweichen von Luft zwischen Siegelkalandern (12) verursacht wird, nicht berücksichtigt, sondern die Maschine anhält, wenn die Bewegung des Gleitkissens (41) der Tastvorrichtung (40) zu plötzlich ist.

7. Tastvorrichtung (40) für die automatische Kontrolle der Längsschweißung an Kunststofffolienbeuteln zur Verwendung in einer Maschine nach Anspruch 1, **dadurch gekennzeichnet, dass** sie ein an einer Basis (42) angelenktes Gleitkissen (41) umfasst, das so konfiguriert ist, dass es durch einen Kolben (43) mit einem in Abhängigkeit von der Art und Dicke der verwendeten Folie regulierbaren Druck gegen einen entsprechenden, mit Luft gefüllten Ballon (20) einer Schlauchfolie gedrückt wird.

8. Tastvorrichtung (40) nach Anspruch 7, **dadurch gekennzeichnet, dass** an dem Kolben (43) ein Positionsdetektor (44) angebracht ist, der zu jedem Zeitpunkt die Position des Kissens (41) erfasst, die durch den Durchmesser des Ballons (20) bestimmt wird, gegen den das Kissen gedrückt wird.

9. Verfahren zur Herstellung von Kunststofffolienbeuteln, das die folgenden Schritte umfasst:
- Abwickeln einer abgeflachten Schlauchfolie (1) von einer Spule (2) mittels eines axialen (4) oder tangentialen Motorantriebs (5);
- Längsschneiden mittels mindestens einer auf eine Temperatur im Bereich von 200 bis 400 Grad erhitzten Klinge und gleichzeitiges Bilden von Längsschweißnähten (7) durch Einwirkung der Klingentemperatur, wodurch mindestens zwei abgeflachte Schlauchfolien (8) erhalten werden;
- Bilden von Seitenfalten des herzustellenden Beutels, wodurch jede abgeflachte Schlauchfolie (8) die Form eines mit Druckluft gefüllten Ballons (20) mit mindestens einer seitlichen Längsschweißung einnimmt;
**dadurch gekennzeichnet, dass** es eine automatische Kontrolle jeder Längsschweißung einnimmt mittels einer entsprechenden Tastvorrichtung (40) vorsieht, die den Druck simuliert, den der Finger des Bedieners gegen den entsprechenden Ballon ausübt und sofort den möglichen Bruch der Schweißung signalisiert, der durch eine plötzliche Bewegung eines Gleitkissens (41) der Tastvorrichtung (40) erfasst wird.

10. Verfahren nach Anspruch 9, **dadurch gekennzeichnet, dass** das Gleitkissen (41) durch einen Kolben (43) mit einem Druck, der in Abhängigkeit von der Art und Dicke der verwendeten Folie reguliert werden kann, gegen den entsprechenden Ballon (20) gedrückt wird.

## Revendications

1. Machine pour la production de sachets en film plastique comprenant :
- un poste de déroulement d'un film tubulaire aplati (1) ;
- un poste de coupe-soudure (6), où au moins une lame chaude en contact avec le film plastique provoque une coupe longitudinale et, en même temps, sous l'effet de la température de la lame, la formation de cordons de soudure longitudinaux (7), en obtenant au moins deux films tubulaires aplatis (8) ;
- un poste (10) de machines à goussets, c'est-à-dire des appareils destinés à la formation des goussets latéraux des sachets à produire, chaque film tubulaire aplati (8) prenant la forme d'un ballon (20), rempli d'air comprimé, doté au moins d'une soudure longitudinale latérale ; **caractérisé en ce qu'**à chaque ballon (20) est placé au moins un dispositif palpeur (40) pour le contrôle automatique d'une soudure longitudinale correspondante, simulant la pression exercée par le doigt de l'opérateur contre le ballon de la machine à goussets et signalant immédiatement l'éventuelle rupture de la soudure.

2. Machine pour la production de sachets en film plastique selon la revendication 1, **caractérisée en ce que** ledit au moins un dispositif palpeur consiste en un patin coulissant (41) articulé sur une base (42) et poussé contre le ballon correspondant (20) par un piston (43) dont la pression peut être réglée en fonction du type et de l'épaisseur du film utilisé.

3. Machine pour la production de sachets en film plastique selon la revendication 2, **caractérisée en ce que** ledit patin (41) est positionné dans la zone du ballon (20) où se trouve la soudure longitudinale correspondante.

4. Machine pour la production de sachets en film plastique selon la revendication 2 ou 3, **caractérisée en ce qu'**un détecteur de position (44) est appliqué sur ledit piston (43) qui détecte à chaque instant la position du patin (41), déterminée par le diamètre du ballon (20) contre lequel le patin est poussé.

5. Machine pour la production de sachets en film plastique selon l'une quelconque des revendications 2 à 4, **caractérisée en ce que** ladite base (42) du dispositif palpeur est montée de manière à pouvoir être ajustée, par le haut ou par le bas, sur une barre de guidage (45) de façon à ce que le patin coulissant respectif (41) soit introduit dans l'espace entre deux ballons adjacents (20), entrant en contact avec une soudure longitudinale respective d'un tube.

6. Machine pour la production de sachets en film plastique selon l'une quelconque des revendications 2 à 5, **caractérisée en ce qu'**elle comporte un logiciel qui ne tient pas compte des oscillations ou même du léger dégonflement d'un ballon (20) provoqué par la fuite naturelle d'air entre les calandres de soudure (12), mais arrête la machine si le mouvement du patin coulissant (41) du dispositif palpeur (40) est trop brusque.

7. Dispositif palpeur (40) pour le contrôle automatique de la soudure longitudinale de sachets en film plastique destinés à être utilisés dans une machine selon la revendication 1, **caractérisé en ce qu'**il comprend un patin coulissant (41) articulé sur une base (42) configuré pour être poussé contre un ballon correspondant (20) rempli d'air d'un film tubulaire par un piston (43) dont la pression peut être réglée en fonction du type et de l'épaisseur du film utilisé.

8. Dispositif palpeur (40) selon la revendication 7, **caractérisé en ce qu'**un détecteur de position (44) est appliqué sur ledit piston (43) qui détecte à chaque instant la position du patin (41), déterminée par le diamètre du ballon (20) contre lequel le patin est poussé.

9. Procédé de production de sachets en film plastique comprenant les étapes suivantes :
- le déroulement d'un film tubulaire aplati (1) à partir d'une bobine (2) au moyen d'un entraînement motorisé axial (4) ou tangentiel (5) ;
- la découpe longitudinale au moyen d'au moins une lame chauffée à une température comprise entre 200 et 400 degrés et la formation simultanée de cordons de soudure longitudinaux (7), sous l'effet de la température de la lame, permettant d'obtenir au moins deux films tubulaires aplatis (8) ;
- la formation de goussets latéraux du sachet à produire faisant prendre à chaque film tubulaire aplati (8) la forme d'un ballon, (20) rempli d'air comprimé, doté au moins d'une soudure longitudinale latérale ;
**caractérisé en ce qu'**il prévoit un contrôle automatique de chaque soudure longitudinale au moyen d'un dispositif palpeur respectif (40) simulant la pression exercée par le doigt de l'opérateur contre le ballon correspondant et signalant immédiatement la rupture possible de la soudure détectée par un mouvement soudain d'un patin coulissant (41) du dispositif palpeur (40).

10. Procédé selon la revendication 9, **caractérisé en ce que** ledit patin coulissant (41) est poussé contre le ballon correspondant (20) par un piston (43) dont la pression peut être réglée en fonction du type et de l'épaisseur du film utilisé.
